# EUROPEAN PATENT APPLICATION

(11) **EP 1 705 394 A1**
(43) Date of publication of application: **27.09.2006**
(21) Application number: 04808193.9
(22) Date of filing: 28.12.2004
(51) Int. Cl.: F16D 3/06, F16D 3/84, B62D 1/20

(54) **TELESCOPIC SHAFT FOR VEHICLE STEERING**

(30) Priority: 08.01.2004 JP 2004003289
(71) Applicant: NSK LTD., Shinagawa-ku, Tokyo 141-8560 (JP); NSK Steering Systems Co. Ltd, Shinagawa-ku, Tokyo 141-8560 (JP)
(72) Inventor: YAMADA, Takatsugu, NSK STEERING SYSTEMS CO. LTD., Maebashi-shi, Gunma 371-8528 (JP); YAMADA, Yasuhisa, NSK STEERING SYSTEMS CO., LTD., Maebashi-shi, Gunma 371-8528 (JP); SHIBA, Takashi, NSK STEERING SYSTEMS CO., LTD, Maebashi-shi, Gunma 371-8528 (JP)
(74) Representative: Cross, James Peter Archibald
(86) International application number: PCT/JP2004/019844
(87) International publication number: WO 2005/066514

(57) **Abstract**

A telescopic shaft for vehicle steering assembled into a steering shaft for a vehicle and having a female shaft and a male shaft that are so fitted to each other as to be unable to relatively rotate but to be slidable, the female shaft having its end portion attached with a seal member for preventing rain water etc from entering inside a fitting portion between the female shaft and the male shaft by sealing this fitting portion. The seal member is constructed of a high-rigidity support member and an elastic member, and an intermediate portion of the support member is bent, one end of the support member is a fixed portion fixed to the end portion of the female shaft, and at least an end portion on the other side of the support member is a fitted portion to which the elastic member is fitted so as to be in contact with an outer peripheral surface of the male shaft with frictional force.

## Description

### Technical Field

The present invention relates to a telescopic shaft for vehicle steering, assembled into a steering shaft for a vehicle and having a female shaft and a male shaft that are so fitted to each other as to be unable to relatively rotate but to be slidable, and including a seal member for preventing rain water etc from entering inside a fitting portion between the female shaft and the male shaft by sealing this fitting portion.

### Background Art

In a steering apparatus for a vehicle, an intermediate shaft is constructed of a telescopic shaft having a spline fitting structure etc, thereby absorbing an axis-directional displacement occurred when traveling and preventing the displacement and vibrations from being transferred onto a steering wheel.

According to Japanese Patent No. 3185450 (corresponding to Japanese Patent Application Laid-Open No. 6-241238), the intermediate shaft is constructed of a female shaft and a male shaft that are spline-fitted to each other, a seal member taking a substantially cap-like shape is attached to the end portion of the female shaft, and this seal member is constructed of only an elastic member made from rubber etc. A lip portion of this seal member slidably abuts on an outer peripheral surface of the male shaft (i.e., abuts thereon with frictional force), thereby preventing the rain water, muddy water, dusts, etc from entering inside the fitting portion between the female shaft and the male shaft.

According to Japanese Patent Application Laid-Open No. 2003-161331, a seal member is constructed of a core metal and an elastic member of rubber etc that covers this core metal, and the lip portion of the elastic member slidably abuts on the outer peripheral surface of the male shaft (i.e., abuts thereon with the frictional force), thereby hermetically sealing an interior of the fitting portion between the female shaft and the male shaft.

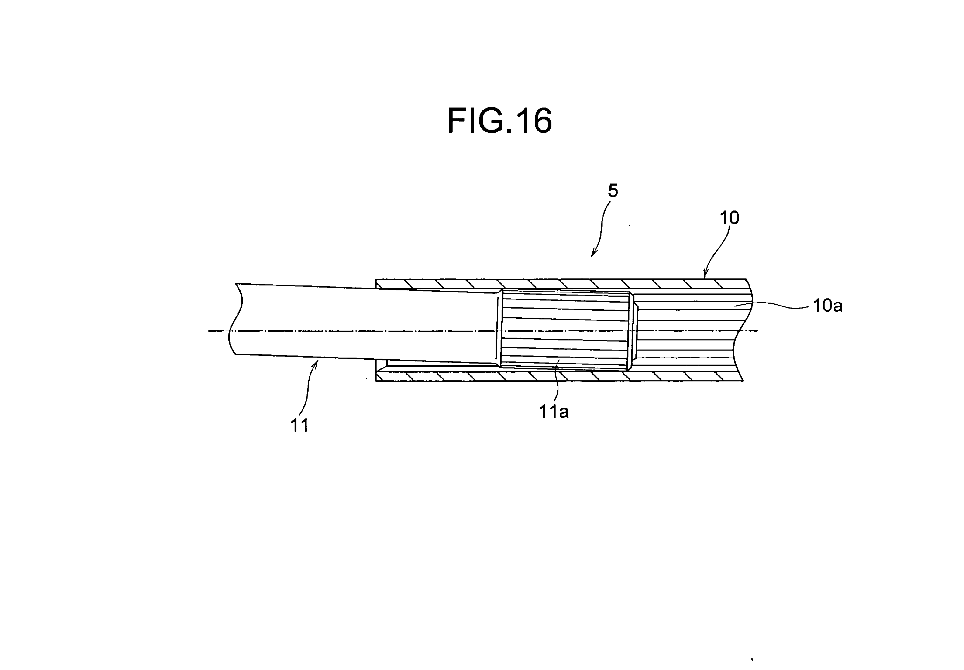

By the way, FIG. 16 is a vertical sectional view of the telescopic shaft for vehicle steering according to the example of the prior art. In this example of the prior art, an intermediate shaft 5 is constructed of a female shaft 10 and a male shaft 11 that are spline-fitted to each other. An inner peripheral surface of the female shaft 10 is formed with a female spline portion 10a (or a female serration portion), and an outer peripheral surface of the male shaft 11 is formed with a male spline portion 11a (or a male serration portion), whereby these two shafts 10, 11 are so constructed as to be slidable but unable to relatively rotate. Note that the seal member described above is not attached in this example of the prior art.

In the case of the example of the prior art given above, the female shaft 10 and the male shaft 11 "inclination" due to a displacement and vibrations caused during traveling as shown in FIG. 16, with the result that noises are emitted and a slide failure occurs.

It is considered that the "inclination" described above can be, it seems, prevented by attaching the end portion of the female shaft with the seal member disclosed in Japanese Patent Application No. 3185450 and Japanese Patent Application Laid-Open No. 2003-161331.

According to Japanese Patent Application No. 3185450, however, the seal member is all made from the rubber, and consequently an inclination preventive function can not be exhibited.

Further, according to Japanese Patent Application Laid-Open No. 2003-161331, the core metal is embedded into the elastic member of the seal member, however, an end portion of this core metal exists in a position apart from the outer peripheral surface of the male shaft, and the core metal serves mainly to attach the seal member to the end portion of the female shaft but is unable to exhibit the inclination preventive function.

### Disclosure of the Invention

It is an object of the invention, which was devised under such circumstances, to provide a telescopic shaft for vehicle steering that is capable of preventing rain water, muddy water, dusts, etc from entering inside a fitting portion between a female shaft and a male shaft by securely sealing the fitting portion and securely preventing the inclination of the female shaft and the male shaft.

To accomplish the above object, in a telescopic shaft for vehicle steering, assembled into a steering shaft for a vehicle and having a female shaft and a male shaft that are so fitted to each other as to be unable to relatively rotate but to be slidable, the female shaft having its end portion attached with a seal member for preventing rain water etc from entering inside a fitting portion between the female shaft and the male shaft by sealing this fitting portion, the seal member is constructed of a high-rigidity support member and an elastic member, and an intermediate portion of the support member is bent, one end of the support member is a fixed portion fixed to the end portion of the female shaft, and at least a front end portion on the other side of the support member is a fitted portion to which the elastic member is fitted so as to be in contact with an outer peripheral surface of the male shaft with frictional force.

In the telescopic shaft for vehicle steering according to the present invention, it is preferable that the support member is formed from a metallic material.

In the telescopic shaft for vehicle steering according to the present invention, it is preferable that an end of the fitted portion of the support member and the outer peripheral surface of the male shaft are substantially proximal without being brought into contact with each other.

In the telescopic shaft for vehicle steering according to the present invention, it is preferable that the outer peripheral surface of the male shaft is provided with a worked portion for sliding worked so as to be fitted relatively unrotatably but slidably with respect to an inner peripheral surface of the female shaft, and an end portion of the fitted portion of the support member has its inside diameter that is set smaller than an outside diameter of the worked portion for sliding.

In the telescopic shaft for vehicle steering according to the present invention, it is preferable that at least one of contact portions between the elastic member and the male shaft is coated with a solid lubricating film.

In the telescopic shaft for vehicle steering according to the present invention, it is preferable that the elastic member has a grease reservoir.

In the telescopic shaft for vehicle steering according to the present invention, it is preferable that a second elastic member is interposed between the end portion of the fixed portion of the support member and the female shaft.

According to the present invention, the seal member is constructed of the high-rigidity support member and the elastic member, and the intermediate portion of the support member is bent, one end of the support member is the fixed portion fixed to the end portion of the female shaft, and at least the front end portion on the other side of the support member is the fitted portion to which the elastic member is fitted so as to be in contact with the outer peripheral surface of the male shaft with the frictional force, whereby it is possible to prevent the rain water, the muddy water, the dusts, etc from entering inside the fitting portion between the female shaft and the male shaft by securely sealing the fitting portion and to prevent an emission of noises and a slide failure by securely preventing the inclination of the female shaft and the male shaft.

### Brief Description of the Drawings

FIG. 1 is a side view showing a steering apparatus for a vehicle according to the present invention;
FIG. 2A is a sectional view showing the telescopic shaft for vehicle steering according to a first embodiment of the present invention; FIG. 2B is a sectional view of a seal member shown in FIG. 2A;
FIG. 3A is a sectional view showing the telescopic shaft for vehicle steering according to a second embodiment of the present invention; FIG. 3B is a sectional view of the seal member shown in FIG. 3A;
FIG. 4A is a sectional view showing the telescopic shaft for vehicle steering according to a third embodiment of the present invention; FIG. 4B is a sectional view of the seal member shown in FIG. 4A;
FIG. 5A is a sectional view showing the telescopic shaft for vehicle steering according to a fourth embodiment of the present invention; FIG. 5B is a sectional view of the seal member shown in FIG. 5A;
FIG. 6A is a sectional view showing the telescopic shaft for vehicle steering according to a fifth embodiment of the present invention; FIG. 6B is a sectional view of the seal member shown in FIG. 6A;
FIG. 7A is a sectional view showing the telescopic shaft for vehicle steering according to a sixth embodiment of the present invention; FIG. 7B is a sectional view showing the telescopic shaft for vehicle steering according to a seventh embodiment of the present invention;
FIGS. 8A, 8B and 8C are vertical sectional views showing an eighth embodiment of the present invention and also showing modified examples of the female shaft and the male shaft;
FIG. 9A is a cross sectional view of the female and male shafts illustrated in FIG. 8A; FIG. 9B is an enlarged vertical sectional view of the end portions of the female and male shafts shown in FIG. 8A;
FIG. 10 is a cross sectional view of the female and male shafts shown in FIG. 8B;
FIG. 11 is a sectional view showing the telescopic shaft for vehicle steering according to a ninth embodiment of the present invention;
FIG. 12 is a sectional view showing the telescopic shaft for vehicle steering according to a tenth embodiment of the present invention;
FIG. 13 is a sectional view showing the telescopic shaft for vehicle steering according to a first modified example of the tenth embodiment of the present invention;
FIG. 14 is a sectional view showing the telescopic shaft for vehicle steering according to a second modified example of the tenth embodiment of the present invention;
FIG. 15 is a sectional view showing the telescopic shaft for vehicle steering according to a third modified example of the tenth embodiment of the present invention; and
FIG. 16 is a vertical sectional view of a telescopic shaft for vehicle steering according to an example of the prior art.

### Best Mode for Carrying out the Invention

A telescopic shaft for vehicle steering according to an embodiment of the invention will hereinafter be described with reference to the drawings.

### (View of Whole Construction of Steering Apparatus for Vehicle)

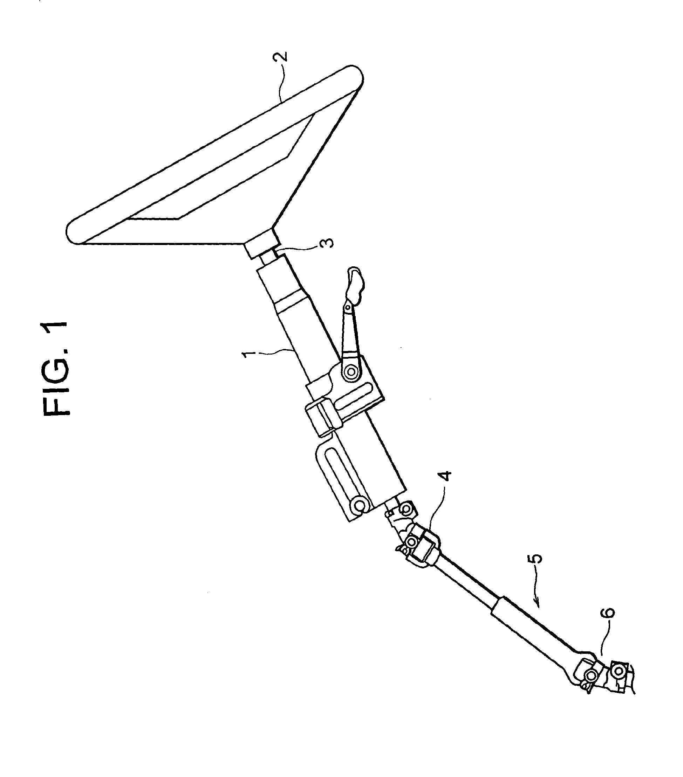

FIG. 1 is a side view showing a steering apparatus for a vehicle according to the present invention. A steering shaft 3 whose rear end is attached with a steering wheel 2 is rotatably supported on a steering column 1.

A telescopic intermediate shaft 5 is connected via a universal joint 4 to a front end of the steering shaft 3. A rack-and-pinion type steering gear (unillustrated) is connected via a universal joint 6 to a lower end of this intermediate shaft 5, and a wheel (unillustrated) is connected via a tie rod (not shown) to the steering gear, whereby the wheel can be steered.

### (First Embodiment)

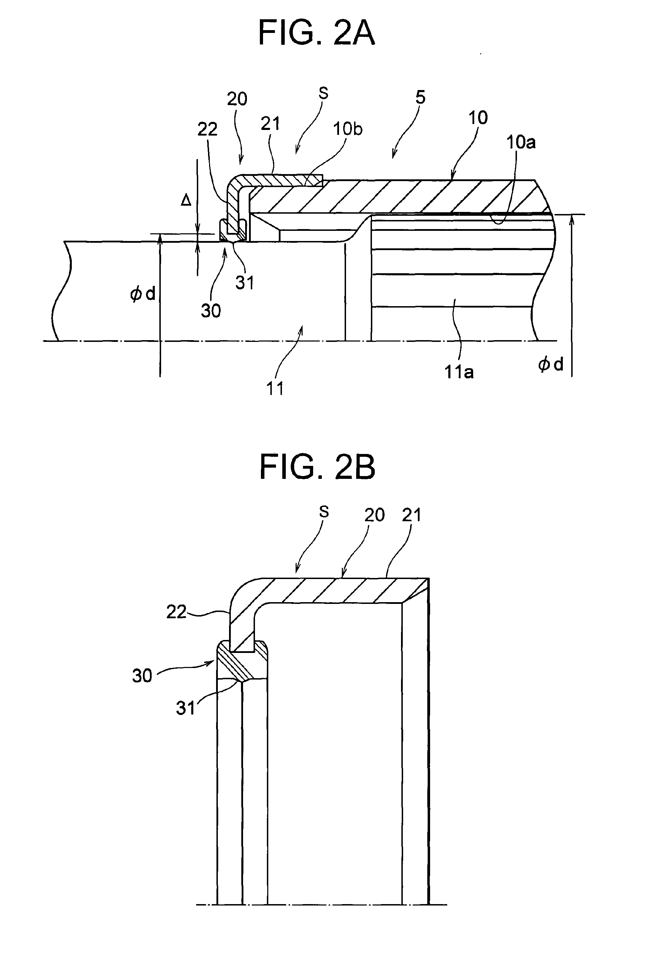

FIG. 2A is a sectional view showing the telescopic shaft for vehicle steering according to a first embodiment of the present invention, and FIG. 2B is a sectional view of a seal member shown in FIG. 2A.

The intermediate shaft 5 is constructed of a female shaft 10 and a male shaft 11 that are spline-fitted to each other. An inner peripheral surface of the female shaft 10 is formed with a female spline portion 10a (or a female serration portion), and an outer peripheral surface of the male shaft 11 is formed with a male spline portion 11a (or a male serration portion), whereby these two shafts 10, 11 are so constructed as to be slidable but unable to relatively rotate.

An end of the female shaft 10 is attached with a seal member S for preventing rain water, muddy water, etc from entering inside a fitting portion between the female and male shafts 10, 11 by sealing this fitting portion. The seal member S is constructed of a high-rigidity metallic annular support member 20 and an elastic member 30 made of rubber, elastomer, etc.

The support member 20, whose intermediate portion is bent at approximately 90 degrees in a substantially circular-arc shape, is constructed of a cylindrical fixed portion 21 fixed to the end portion of the female shaft 10 and a fitted portion 22, extending inward in a radial direction, to which the elastic member 30 is fitted so as to abut on the outer peripheral surface of the male shaft 11 with frictional force.

The fixed portion 21 is press-fitted in an annular recessed portion 10b formed in the outer periphery of the end portion of the female shaft 10. To be specific, the recessed portion 10b of the female shaft 10 is fitted to the inner peripheral surface of the fixed portion 21, directly (namely, by a metal-to-metal contact).

The fitted portion 22 is configured so that a gap (Δ) between the front end portion of the fitted portion 22 and the outer peripheral surface of the male shaft 11 is set to preferably approximately 0.2 mm through 1 mm. With this contrivance, it is possible to prevent emission of noises and a slide failure by securely preventing the female and male shafts 10, 11 from inclination.

Further, an inside diameter (ϕd) of the front end portion of the fitted portion 22 is set smaller than an outside diameter (ϕD) of a gear tip of the male spline portion 11a. With this contrivance, the seal member S can function as a stopper for preventing the male shaft 11 from coming off when carrying and assembling the intermediate shaft 5.

The elastic member 30 is in slide contact with the outer peripheral surface of the male shaft 11 with a proper interference and, in the first embodiment, has a single piece of seal lip portion 31.

Moreover, the seal lip portion 31 takes a substantially triangle in section but is not limited to this shape.

This sealing structure makes it possible to prevent the rain water, the muddy water and dusts from entering inside the fitting portion by securely sealing the fitting portion between the female and male shafts 10, 11. Further, the elastic member 30 can serve as a role of the dust seal and as a stopper for preventing a leakage of grease in the sliding portion.

In all the following embodiments including the first embodiment, the grease used in the seal lip portion 31 preferably contains molybdenum disulfide and PTFE (polytetrafluoroethylene).

### (Second Embodiment)

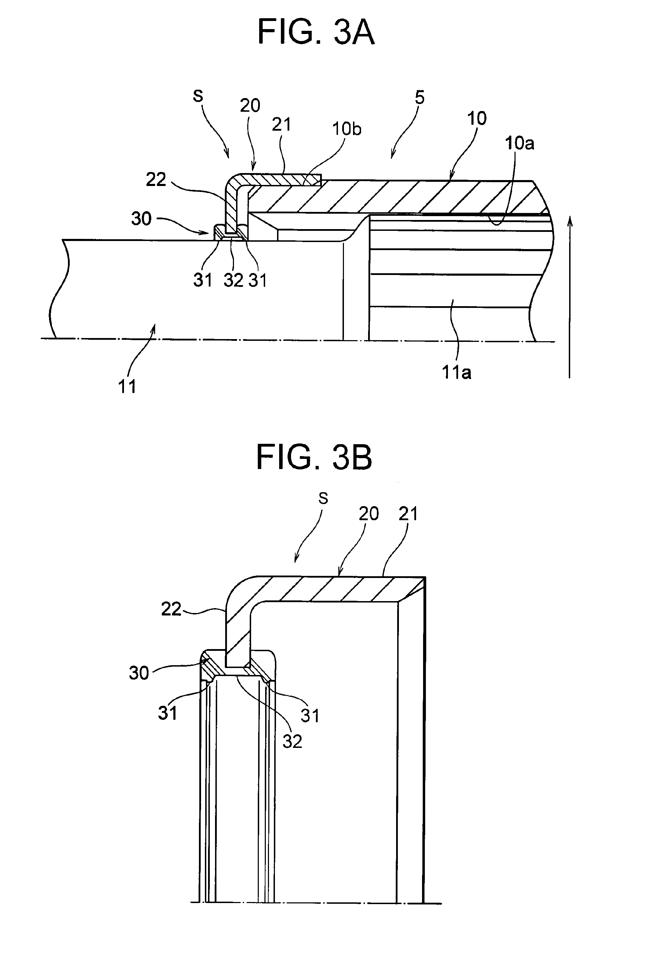

FIG. 3A is a sectional view showing the telescopic shaft for vehicle steering according to a second embodiment of the present invention, and FIG. 3B is a sectional view of the seal member shown in FIG. 3A.

Further, as obvious from the drawings, the second embodiment has the same basic structure as that in the first embodiment discussed above, and the explanation will be focused only on a different point.

In the second embodiment, the elastic member 30 has two pieces of seal lip portions 31. This contrivance makes it possible to prevent the rain water, the muddy water and dusts from entering inside the fitting portion by securely sealing the fitting portion between the female and male shafts 10, 11.

A grease reservoir portion 32 is formed between these two seal lip portions 31. This grease reservoir portion 32, since the grease is always reserved in this grease reservoir portion 32, functions as a reducer of a slide resistance when sliding and also as an assistant for preventing the muddy water and the dusts from entering.

Other configurations, operations and effects are the same as those in the first embodiment discussed above.

### (Third Embodiment)

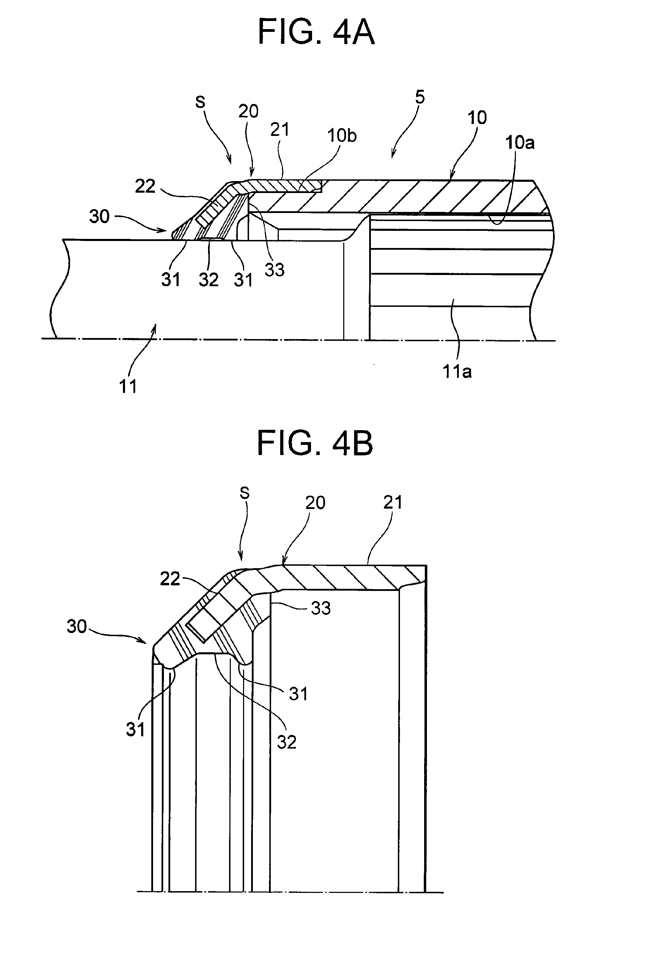

FIG. 4A is a sectional view showing the telescopic shaft for vehicle steering according to a third embodiment of the present invention, and FIG. 4B is a sectional view of the seal member shown in FIG. 4A.

Further, as apparent from the drawings, the third embodiment has the same basic structure as that in the first embodiment discussed above, and the explanation will be focused only on a different point.

In the third embodiment, the fixed portion 21 and the fitted portion 22 of the support member 20 are bent at an obtuse angle (equal to or larger than 90 degrees) in the substantially circular-arc shape. With this contrivance, a lip portion of a dust cover can be prevented from being caught when assembling the dust cover (hole cover), thereby improving the assembility.

Moreover, the elastic member 30 covers substantially the whole of the fitted portion 22 and has two pieces of seal lip portions 31. This contrivance makes it possible to prevent the rain water, the muddy water and dusts from entering inside the fitting portion by securely sealing the fitting portion between the female and male shafts 10, 11.

The grease reservoir portion 32 is formed between these two seal lip portions 31. This grease reservoir portion 32, since the grease is always reserved in this grease reservoir portion 32, functions as the reducer of the slide resistance when sliding and also as the assistant for preventing the muddy water and the dusts from entering.

Further, the elastic member 30 has a contact portion 33 that is brought into contact with the front end surface of the female shaft 10. This contact portion 33 can improve the sealing property. This contrivance can more securely prevent the muddy water and the dusts from entering the metal fitting portion.

Other configurations, operations and effects are the same as those in the first embodiment discussed above.

### (Fourth Embodiment)

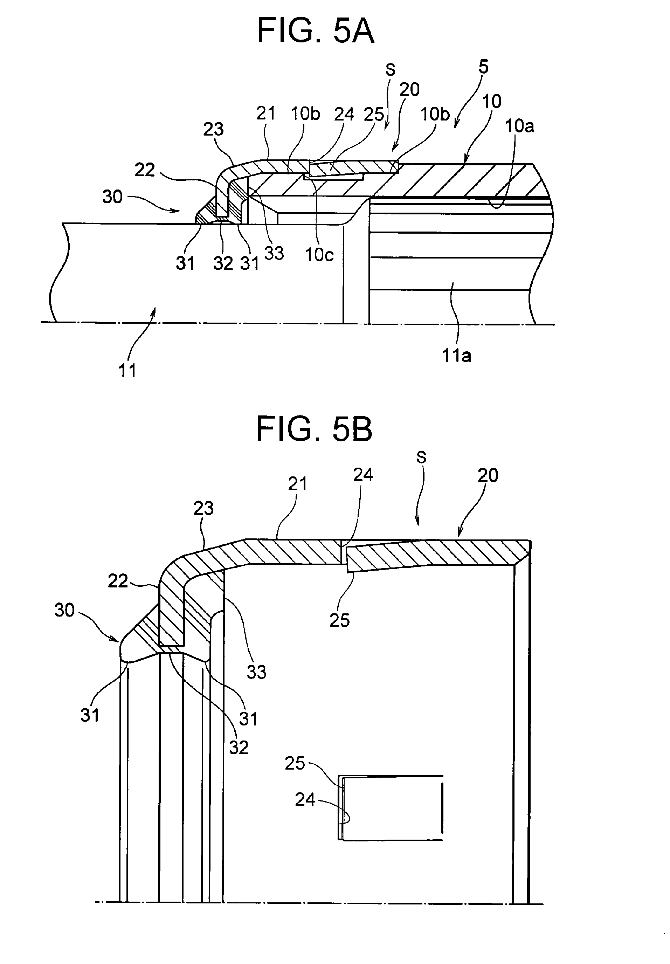

FIG. 5A is a sectional view showing the telescopic shaft for vehicle steering according to a fourth embodiment of the present invention, and FIG. 5B is a sectional view of the seal member shown in FIG. 5A.

Further, as obvious from the drawings, the fourth embodiment has the same basic structure as that in the first embodiment discussed above, and the explanation will be focused only on a different point.

In the fourth embodiment, the elastic member 30 has two pieces of seal lip portions 31. This contrivance makes it possible to prevent the rain water, the muddy water and dusts from entering inside the fitting portion by securely sealing the fitting portion between the female and male shafts 10, 11. The grease reservoir portion 32 is formed between these two seal lip portions 31. This grease reservoir portion 32, since the grease is always reserved in this grease reservoir portion 32, functions as the reducer of the slide resistance when sliding and also as the assistant for preventing the muddy water and the dusts from entering. Further, the elastic member 30 has the contact portion 33 that is brought into contact with the front end surface of the female shaft 10. This contact portion 33 can improve the sealing property.

Moreover, in the fifth embodiment, an intermediate portion 23 is provided between the fixed portion 21 and the fitted portion 22 of the support member 20, wherein the fixed portion 21 and the intermediate portion 23 are bent at an obtuse angle in the substantially circular-arc shape, and the intermediate portion 23 and the fitted portion 22 are bent at an obtuse angle in the substantially circular-arc shape.

Further, the fixed portion 21 of the support member 20 is formed with a cut portion 24, thereby raising up an engagement piece 25. Further, a recessed engagement portion 10c is formed in the outer peripheral surface of the female shaft 10. Though not illustrated, the cut portions 24 are formed by four in a circumferential direction, however, the number of these cut portions 24 is not limited.

Accordingly, the front side edge of the engagement piece 25 of the fixed portion 21 engages with the recessed engagement portion 10c of the female shaft 10, thereby enabling sure engagement (coupling) between the support member 20 and the female shaft 10.

Other configurations, operations and effects are the same as those in the first embodiment discussed above.

### (Fifth Embodiment)

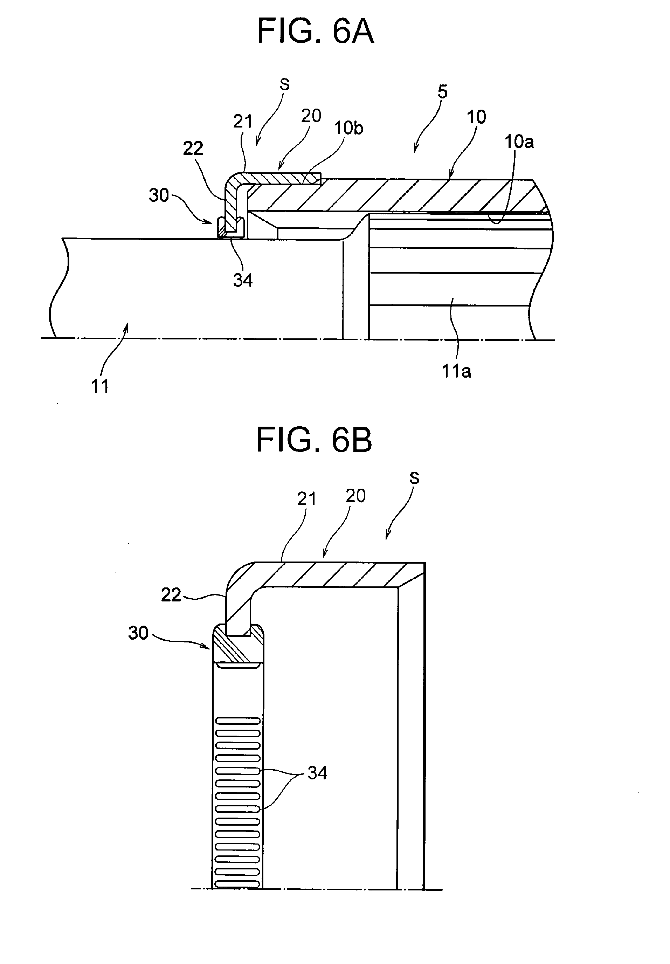

FIG. 6A is a sectional view showing the telescopic shaft for vehicle steering according to a fifth embodiment of the present invention, and FIG. 6B is a sectional view of the seal member shown in FIG. 6A.

Further, as apparent from the drawings, the fifth embodiment has the same basic structure as that in the first embodiment discussed above, and the explanation will be focused only on a different point.

In the fifth embodiment, only the multiplicity of protrusions 34 each taking an elliptical shape is formed in the inner peripheral surface (i.e., the surface that faces the male shaft 11) of the elastic member 30. These elliptical protrusions 34, when the male shaft 11 inclines in an orthogonal direction to the axis due to a gap between the male shaft 11 and the female shaft 10, are brought into contact with the outer peripheral surface of the male shaft 11, thereby preventing emission of a butting sound. Further, such contact of the protrusions 34 can decrease a contact area, thereby yielding an effect of reducing the resistance when sliding. The fifth embodiment mainly aims at preventing the emission of the butting sound when the male shaft 11 inclines and restraining a rise in the slide resistance rather than preventing the (muddy) water and the dusts from entering.

Other configurations, operations and effects are the same as those in the first embodiment discussed above.

### (Sixth Embodiment)

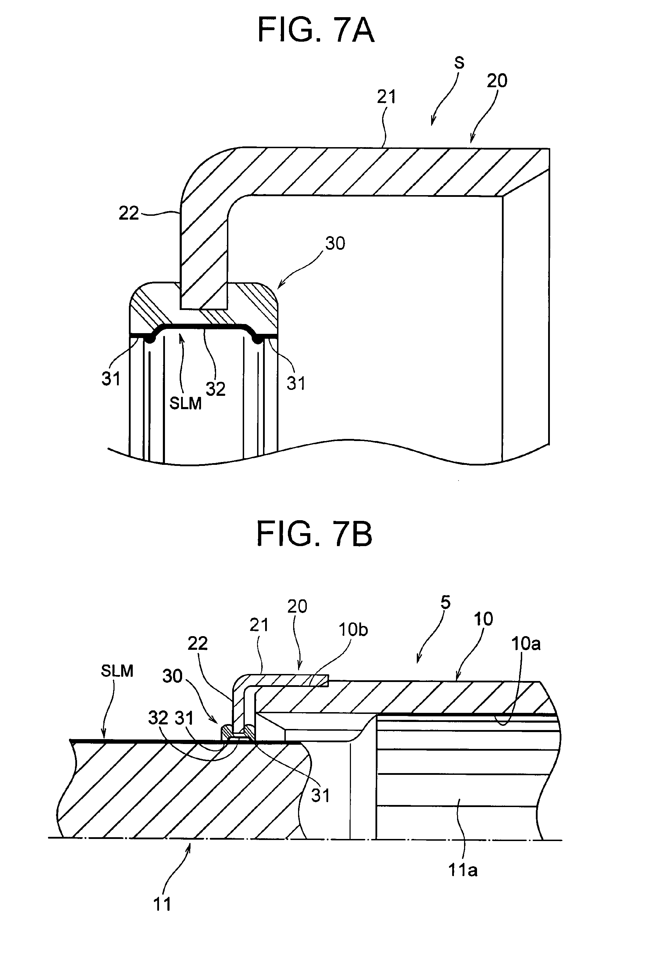

FIG. 7A is a sectional view showing a seal member of the telescopic shaft for vehicle steering according to a sixth embodiment of the present invention.

Further, as obvious from the drawings, the sixth embodiment has the same basic structure as that in the second (or first) embodiment, and the explanation will be focused only on a different point.

In the sixth embodiment, the inner peripheral surface (i.e., the surface that faces the male shaft 11) of the elastic member 30 is coated with a solid lubrication film SLM. With this contrivance, it is possible to reduce the slide resistance when the male and female shafts 10, 11 slide.

Other configurations, operations and effects are the same as those in the first embodiment discussed above.

### (Seventh Embodiment)

FIG. 7B is a sectional view showing the telescopic shaft for vehicle steering according to a seventh embodiment of the present invention.

Further, as obvious from the drawings, the seventh embodiment has the same basic structure as that in the second embodiment (or the first embodiment) discussed above, and the explanation will be focused only on a different point.

In the seventh embodiment, the outer peripheral surface (i.e., the surface that faces the elastic member 30) of the male shaft 11 is coated with the solid lubrication film SLM. With this contrivance, it is feasible to reduce the slide resistance when the male and female shafts 10, 11 slide.

Other configurations, operations and effects are the same as those in the second (or first) embodiment discussed above. In combination with the sixth embodiment, both of the elastic member 30 and the male shaft 11 may also be coated with the film.

### (Eighth Embodiment)

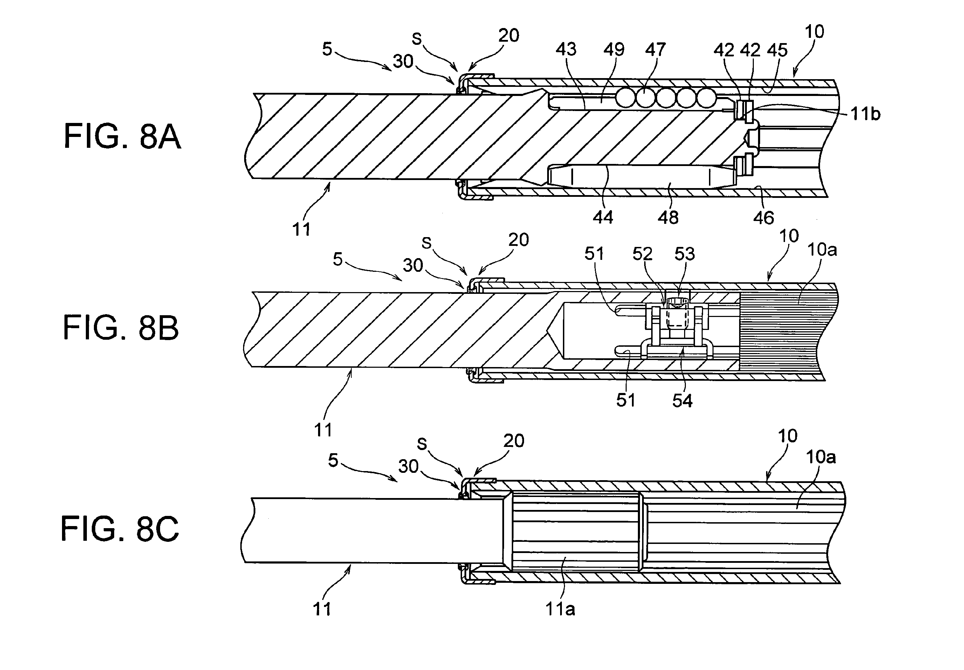

FIGS. 8A, 8B and 8C are vertical sectional views showing an eighth embodiment of the present invention and also showing modified examples of the female shaft and the male shaft.

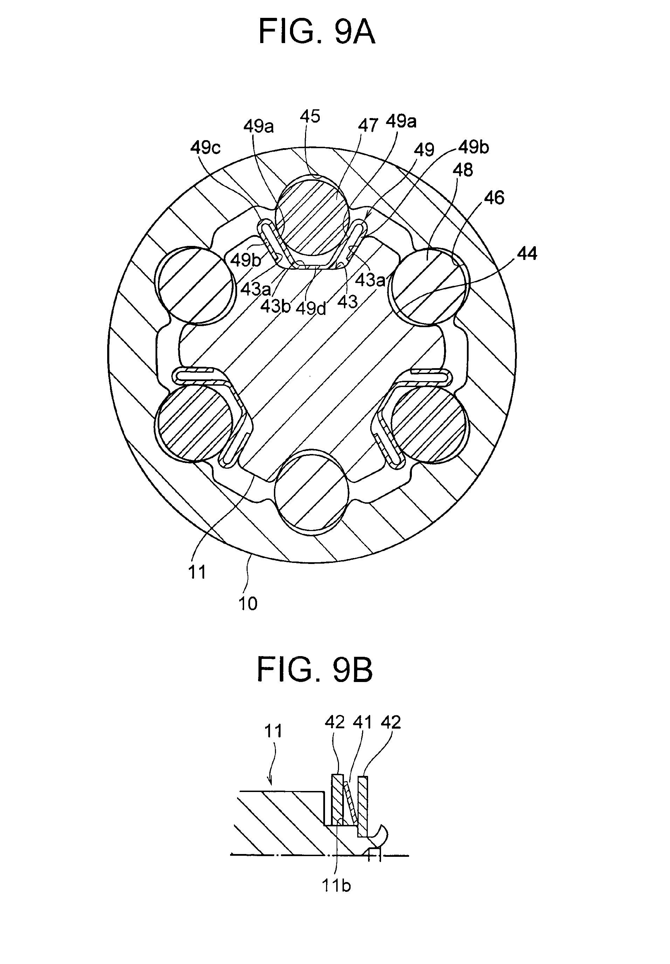

FIG. 9A is a cross sectional view of the female and male shafts illustrated in FIG. 8A, and FIG. 9B is an enlarged vertical sectional view of the end portions of the female and male shafts shown in FIG. 8A.

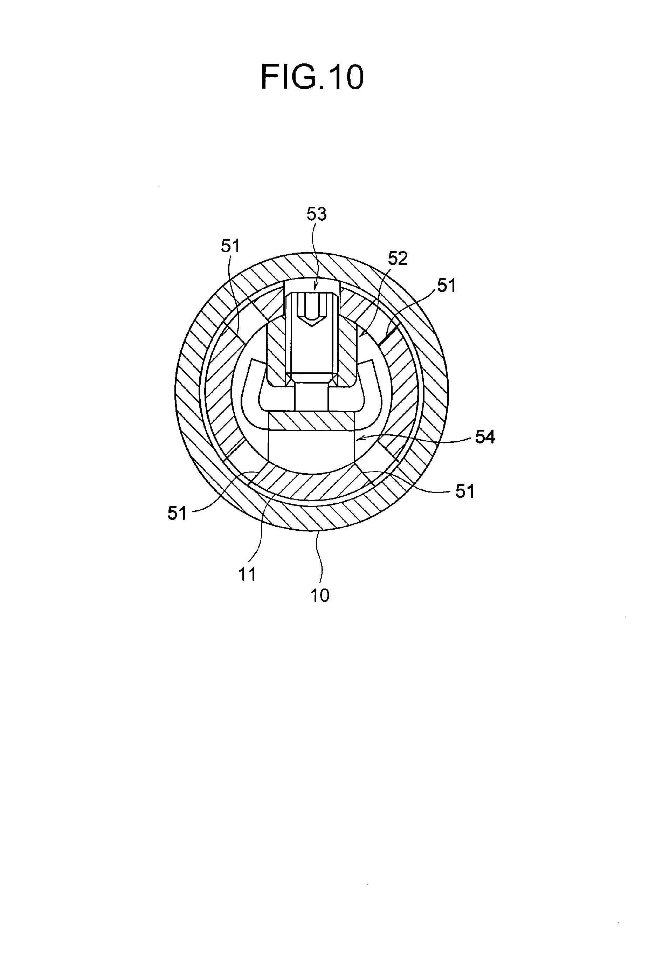

FIG. 10 is a cross sectional view of the female and male shafts shown in FIG. 8B.

Further, the seal member in the modified examples of the female and male shafts in FIGS. 8A, 8B and 8C is the same as that in the first embodiment discussed above.

### (Ball/Key Slider)

As shown in FIGS. 8A and 9A, three axis-directional grooves 43 disposed at an equal interval (phase interval) of 120 degrees in the circumferential direction are so formed as to extend in the outer peripheral surface of the male shaft 11. Corresponding to this arrangement, three axis-directional grooves 45 disposed at an equal interval (phase interval) of 120 degrees in the circumferential direction are so formed as to extend in the inner peripheral surface of the female shaft 10.

A plurality of rigid spherical members 47 (which are also referred to as rolling members or balls) rolling when the both of the shafts 10, 11 make relative movements in the axis-direction, are so interposed as to be capable of rolling between the axis-directional groove 43 of the male shaft 11 and the axis-directional groove 45 of the female shaft 10. Note that the axis-directional groove 45 of the female shaft 10 takes the substantially circular-arc shape or a Gothic arch shape in section.

The axis-directional groove 43 of the male shaft 11 is configured by a pair of inclined flat side surfaces 43a and a bottom surface 43b formed flat between the pair of flat side surfaces 43a.

A plate spring 49 which is contact with the spherical member 47 to apply a preload thereto, is interposed between the axis-directional groove 43 of the male shaft 11 and the spherical member 47.

The plate spring 49 has spherical member sided contact portions 49a which are in contact with the spherical member 47 at two points, groove surface sided contact portions 49b respectively spaced away at a predetermined interval in the substantially circumferential direction from the spherical member sided contact portions 49a and abutting on the flat side surfaces 43a of the axis-directional groove 43 of the male shaft 11, biasing portions 49c each elastically biasing the spherical member sided contact portion 49a and the groove surface sided contact portion 49b in such a direction as to get apart from each other, and a bottom portion 49d facing the bottom surface 43b of the axis-directional groove 43.

This biasing portion 49c takes a substantially U-shape forming a bent shape bent in a substantially circular-arc shape. The biasing portion 49c taking this bent shape can elastically bias the spherical member sided contact portion 49a and the groove surface sided contact portion 49b so as to get apart from each other.

As shown in FIG. 9A, three axis-directional grooves 44 disposed at an equal interval (phase interval) of 120 degrees in the circumferential direction are so formed as to be elongated in the outer peripheral surface of the male shaft 11. Corresponding to this arrangement, three axis-directional grooves 46 disposed at an equal interval (phase interval) of 120 degrees in the circumferential direction are so formed as to be elongated in the inner peripheral surface of the female shaft 10.

A plurality of rigid cylindrical members 48 (which are also referred to as sliders or needle rollers) sliding when the both of the shafts 10, 11 make relative movements in the axis-direction, is interposed with a minute gap between the axis-directional groove 44 of the male shaft 11 and the axis-directional groove 46 of the female shaft 10. Note that each of these axis-directional grooves 44, 46 takes the substantially circular-arc shape or the Gothic arch shape in section.

Further, as shown in FIGS. 8A and 9B, a small-diameter portion 11b is formed at the end portion of the male shaft 11. A stopper member constructed of an elastic plate 41 and a pair of annular flat plates 42, 42 pinching this elastic plate 41 therebetween, is fitted and fixed to the small-diameter portion 11b by caulking or clinching. This stopper member abuts on one end portion of a needle roller 48 interposed between the axis-directional grooves 44, 46 and gives a proper preload while regulating the needle roller in the axis-direction.

In the thus-constructed telescopic shaft, the spherical member 47 is interposed between the male shaft 11 and the female shaft 10, and the plate spring 49 pre-loads the spherical member 47 against the female shaft 10 to such an extent as not to cause a backlash. Therefore, when transferring a low torque, the backlash between the male shaft 11 and the female shaft 10 can be securely prevented, and, when the male shaft 11 and the female shaft 10 make the relative movements in the axis-direction, it is possible to slide with a stable slide load without causing any backlash.

When transferring a high torque, the plate spring 49 elastically deforms and thus restricts the spherical member 47 in the circumferential direction. At the same time, the three lines of cylindrical members 48 interposed between the male shaft 11 and the female shaft 10 perform a main role of transferring the torque.

For example, when the torque is inputted from the male shaft 11, at an initial stage, because of the preload of the plate spring 49, no backlash is caused and the plate spring 49 generates reaction against the torque, thereby transferring the torque. At this time, the torque is transferred on the whole in an equilibrium state between the transferred torque and the input torque among the male shaft 11, the plate spring 49, the spherical member 47 and the female shaft 10.

As the torque further increases, the gap in the rotating direction between the male shaft 11 and the female shaft 10 via the cylindrical member 48 disappears, and hereafter the torque increment is transferred by the cylindrical member 48 through the male shaft 11 and the female shaft 10. It is therefore possible to securely prevent the backlash in the rotating direction between the male shaft 11 and female shaft 10 and to transfer the torque in the high-rigidity state.

From what has been discussed so far, according to the eighth embodiment, the cylindrical member 48 other than the spherical member 47 is provided and therefore can support a large proportion of load quantity when the large torque is inputted. Accordingly, the durability can be improved by decreasing a contact pressure between the axis-directional groove 45 of the female shaft 10 and the spherical member 47, and the torque can be transferred in the high-rigidity state when the load of the large torque is applied.

As described above, according to the eighth embodiment, it is possible to actualize the stable slide load and to transfer the torque in the high-rigidity state by securely preventing the backlash in the rotating direction.

### (Screw Adjusting Type Slide)

As shown in FIGS. 8B and 10, the end portion of the male shaft 11 is hollowed or formed in a cylindrical shape, and a plurality (four pieces in the illustrated example) of slits 51 are so provided as to extend in the axis-direction. This arrangement enables the end portion of the male shaft 11 to reduce or expand its diameter.

The hollowed end portion of the male shaft 11 is provided with a screw type diameter adjusting mechanism. To be specific, as shown in FIG. 10, a nut member 52 having a female screw formed in the inner peripheral surface erects in a radial direction, and an adjusting bolt 53 is screwed in this nut member 52.

A support member 54 is provided facing the nut member 52, and an end of the adjusting bolt 53 can abut on and be pressed against this support member 54.

Hence, when reducing pressure against the support member 54 from the adjusting bolt 53 by adjusting this adjusting bolt 53, the hollowed end portion of the male shaft 11 provided with the slits 51 reduces its diameter. With this contrivance, the slide resistance between the female shaft 10 and the male shaft 11 can be decreased.

Further, when increasing the pressure against the support member 54 from the adjusting bolt 53 by adjusting this adjusting bolt 53, the hollowed end portion of the male shaft 11 provided with the slits 51 expands its diameter. With this contrivance, the slide resistance between the female shaft 10 and the male shaft 11 can be increased.

### (Spline/Slider)

As illustrated in FIG. 8C, the intermediate shaft 5 is constructed of the female shaft 10 and the male shaft 11 that are spline-fitted to each other. The inner peripheral surface of the female shaft 10 is formed with the female spline portion 10a (or the female serration portion), and the outer peripheral surface of the male shaft 11 is formed with the male spline portion 11a (or the male serration portion), whereby these two shafts 10, 11 are so constructed as to be slidable but unable to relatively rotate.

The male spline portion 11a of the male shaft 11 or the female spline portion 10a of the female shaft 10, or both of the shafts 10, 11 is or are coated with the solid lubricating film SLM. The solid lubricating film SLM may also be coated with a resin. With this contrivance, it is possible to reduce the slide resistance when the female shaft 10 and the male shaft 11 slide.

### (Ninth Embodiment)

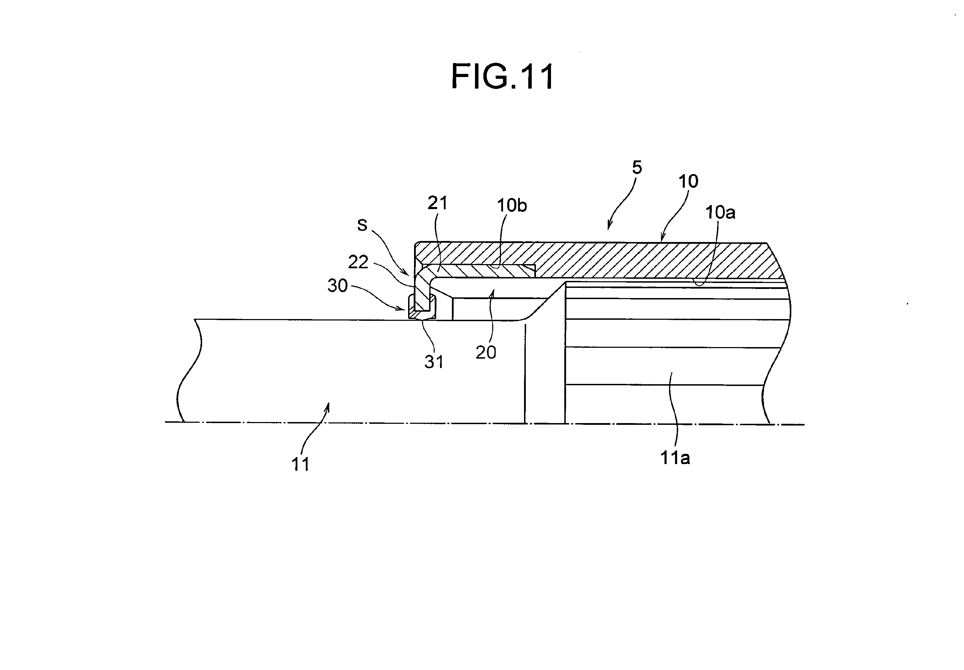

FIG. 11 is a sectional view showing the telescopic shaft for vehicle steering according to a ninth embodiment of the present invention.

Further, as obvious from the drawings, the ninth embodiment has the same basic structure as that in the first embodiment discussed above, and the explanation will be focused only on a different point.

In the ninth embodiment, the inner peripheral surface of the end portion of the female shaft 10 is formed with a recessed portion 10d, and a cylindrical fixed portion 21 of the support member 20 is fixedly press-fitted in this recessed portion 10d. To be specific, the inner peripheral surface of the recessed portion 10d and the outer peripheral surface of the fixed portion 21 are fitted directly (namely, by a metal-to-metal contact).

In the ninth embodiment, the end portion of the female shaft 10 is positioned outside the support member 20 made of an iron ring, and hence the rigidity against the inclination and torsion becomes higher than in the case of press-fitting the support member 20 on the end portion of the female shaft 10 (than in the first embodiment etc).

Moreover, the support member 20 is not exposed outside the female shaft 10, and hence there is no necessity of giving consideration to the seal portion when assembling the hole cover (a dust seal for partitioning an interior of a vehicle compartment from an engine compartment).

Other configurations, operations and effects are the same as those in the first embodiment discussed above.

### (Tenth embodiment)

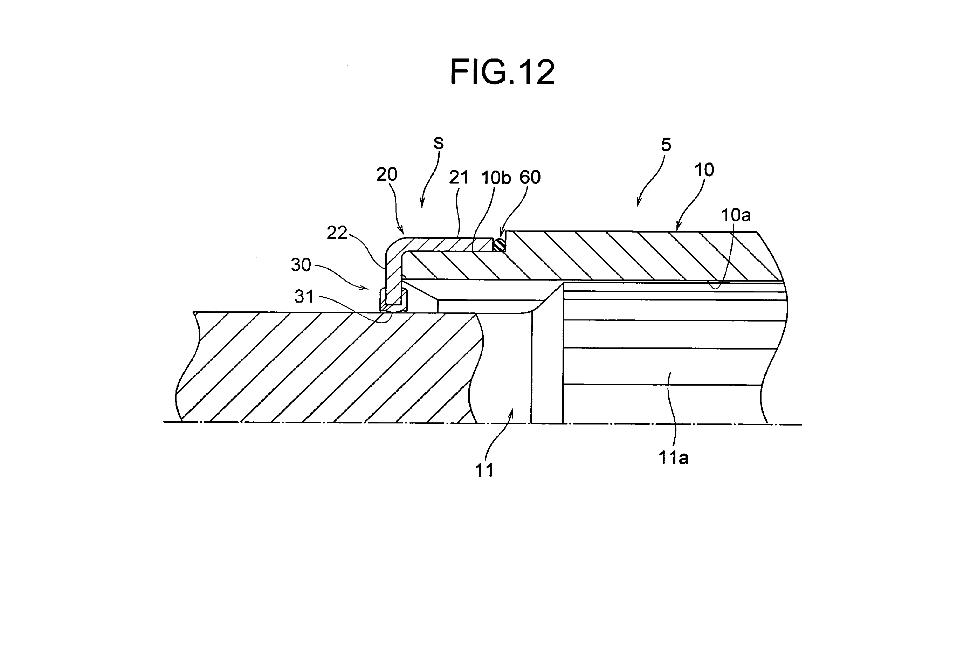

FIG. 12 is a sectional view showing the telescopic shaft for vehicle steering according to a tenth embodiment of the present invention.

Further, as obvious from the drawings, the tenth embodiment has the same basic structure as that in the first embodiment discussed above, and the explanation will be focused only on a different point.

A characteristic of the tenth embodiment is that a second elastic member 60 is interposed between the end portion (which is a right side portion as viewed in FIG. 12) of the cylindrical fixed portion 21 of the support member 20 and the female shaft 10.

To be specific, the construction is that the second elastic member 60 such as an O-ring made of rubber and elastomer is attached between the end portion (which is the right side portion as viewed in FIG. 12) of the fixed portion 21 of the support member 20 and a wall portion of the recessed portion 10b of the female shaft 10, and sealing action is applied to the wall portion of the recessed portion 10b of the female shaft 10.

This arrangement can further ensure the sealing of the metal fitting portion. Moreover, the second elastic member 60 is provided on the outer periphery, and therefore it can be visually confirmed that the second elastic member 60 deforms to seal. Other configurations, operations and effects are the same as those in the first embodiment discussed above.

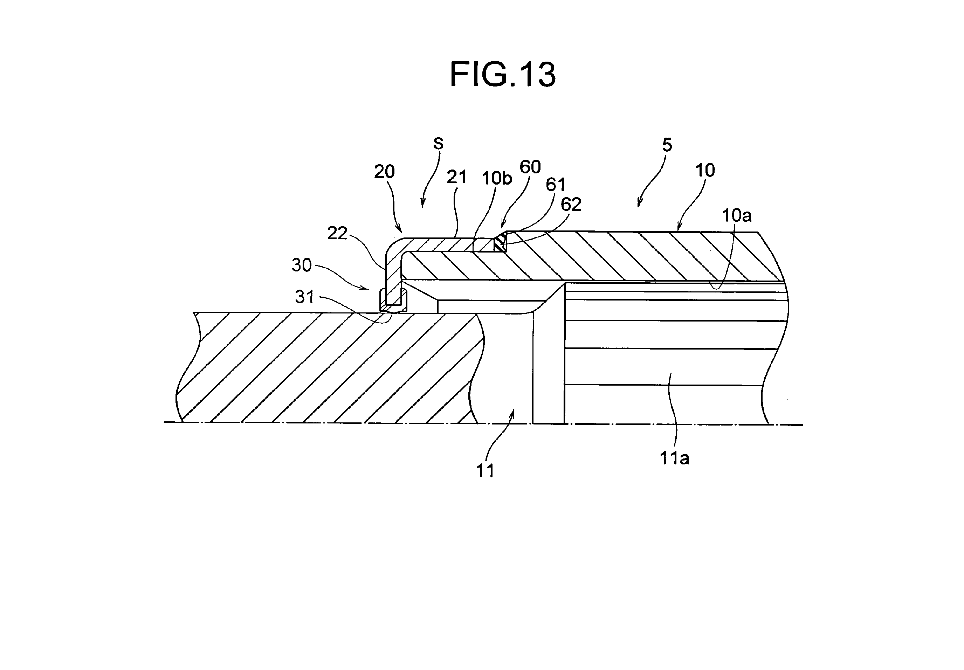

FIG. 13 is a sectional view showing the telescopic shaft for vehicle steering according to a first modified example of the tenth embodiment of the present invention.

In the first modified example, the second elastic member 60 has double seal lips 61, 62. These double seal lips 61, 62 are configured to apply the seal action to the wall portion of the recessed portion 10b of the female shaft 10. Further, the sealing can be further endured by inputting the grease into the grease reservoir. Other configurations, operations and effects are the same as those in the tenth embodiment discussed above.

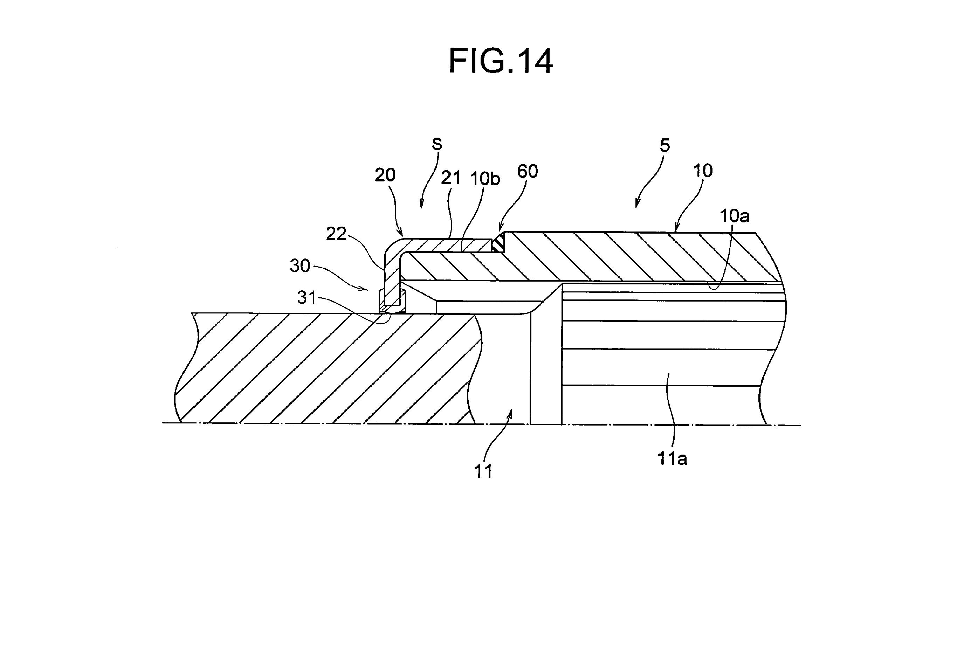

FIG. 14 is a sectional view showing the telescopic shaft for vehicle steering according to a second modified example of the tenth embodiment of the present invention.

In the second modified example, the second elastic member 60 is bonded to the wall portion side of the recessed portion 10b of the female shaft 10 by use of a bonding agent etc. This configuration is made to apply the seal acting to the end portion of the fixed portion 21 of the support member 20. Other configurations, operations and effects are the same as those in the tenth embodiment discussed above.

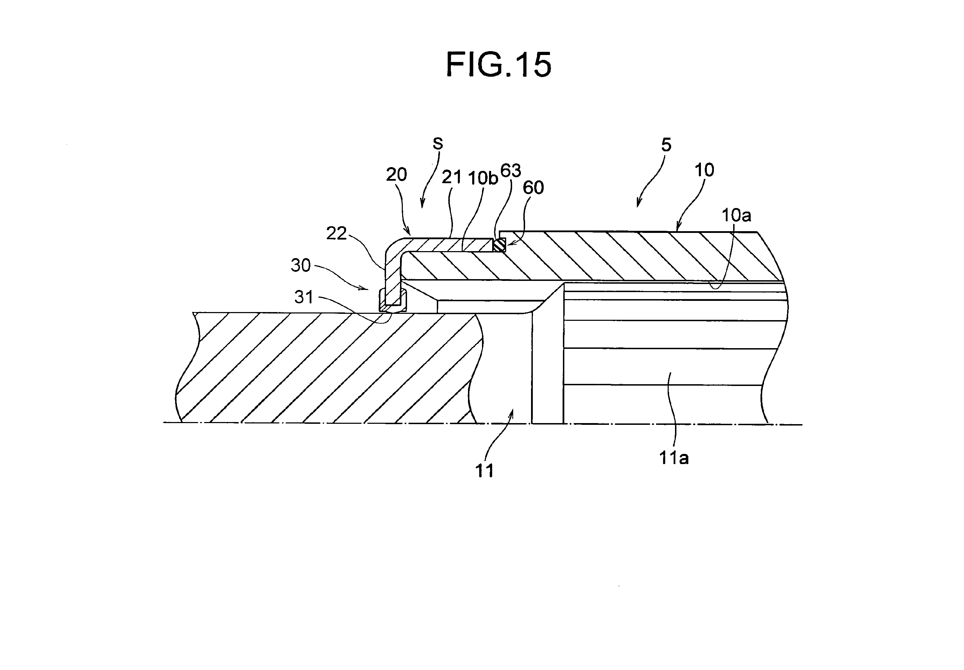

FIG. 15 is a sectional view showing the telescopic shaft for vehicle steering according to a third modified example of the tenth embodiment of the present invention.

In the third modified example, a peaked protrusion 63 is formed on the wall portion of the recessed portion 10b of the female shaft 10, and an O-ring 60 (the second elastic member) is housed therein. Other configurations, operations and effects are the same as those in the tenth embodiment discussed above.

It should be noted that the present invention is not limited to the embodiments discussed above and can be modified in a variety of forms.

## Claims

1. A telescopic shaft for vehicle steering assembled into a steering shaft for a vehicle and having a female shaft and a male shaft that are so fitted to each other as to be unable to relatively rotate but to be slidable, said female shaft having its end portion attached with a seal member for preventing rain water etc from entering inside a fitting portion between said female shaft and said male shaft by sealing this fitting portion,
said seal member being constructed of a high-rigidity support member and an elastic member,
wherein an intermediate portion of said support member is bent, one end of said support member is a fixed portion fixed to the end portion of said female shaft, and at least a front end portion on the other side of said support member is a fitted portion to which said elastic member is fitted so as to be in contact with an outer peripheral surface of said male shaft with frictional force.

2. The telescopic shaft for vehicle steering according to claim 1, wherein said support member is formed from a metallic material.

3. The telescopic shaft for vehicle steering according to claim 1 or 2, wherein an end of said fitted portion of said support member and the outer peripheral surface of said male shaft are substantially proximal without being brought into contact with each other.

4. The telescopic shaft for vehicle steering according to claim 1, wherein the outer peripheral surface of said male shaft is provided with a worked portion for sliding worked so as to be fitted relatively unrotatably but slidably with respect to an inner peripheral surface of said female shaft, and
an end portion of said fitted portion of said support member has its inside diameter that is set smaller than an outside diameter of said worked portion for sliding.

5. The telescopic shaft for vehicle steering according to claim 1 or 2, wherein at least one of contact portions between said elastic member and said male shaft is coated with a solid lubricating film.

6. The telescopic shaft for vehicle steering according to claim 1 or 2, wherein said elastic member has a grease reservoir.

7. The telescopic shaft for vehicle steering according to claim 1 or 2, wherein a second elastic member is interposed between the end portion of said fixed portion of said support member and said female shaft.
